# EUROPEAN PATENT SPECIFICATION

(11) **EP 2 747 255 B1**
(45) Date of publication and mention of the grant of the patent: **17.05.2017**
(21) Application number: 12197627.8
(22) Date of filing: 18.12.2012
(51) Int. Cl.: H02K 13/02, H02K 3/51, H02K 7/00

(54) **Rotor for an electric machine**
Rotor für eine elektrische Maschine
Rotor pour machine électrique

(43) Date of publication of application: 25.06.2014
(73) Proprietor: General Electric Technology GmbH, 5400 Baden (CH)
(72) Inventor: Mundstock, Matthias Christian, 67117 Limburgerhof (DE); Giese, Andreas, 69190 Walldorf (DE); Goebel, Stephan, 69198 Schriesheim (DE); Visintin, Massimiliano, 8002 Zürich (CH)
(74) Representative: General Electric Technology GmbH

(56) References cited:
- WO-A1-2011/009901
- US-A1- 2003 203 673
- US-A1- 2011 148 231
- US-B1- 6 236 128

## Description

### TECHNICAL FIELD

The present disclosure relates to a rotor for an electric machine.

The electric machine is in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor or also other types of electric machines.

### BACKGROUND

Electric machine have a stator and a rotor having an active part and shafts extending from the active part. The stator and the active part of the rotor are housed in a casing.

The shafts extend outside the casing through apertures of the casing.

One of the shafts is provided with slip rings that are connected to an exciter to receive electric power. In addition, the slip rings are also connected to a conductor that is embedded in the rotor and is connected to a stalk. The stalk projects outside of the rotor and is connected to a winding, for supplying the electric power from the exciter to the winding.

The conductor is housed in an axial chamber of the rotor and the stalk is housed in a radial hole of the rotor. For this reason, in order to prevent gas (such as hydrogen) from entering the hole (i.e. the gap between the stalk and the hole internal surface), seals are provided.

Traditionally, the seals are defined by O-rings that are compressed along a direction parallel to the hole axis. For example it is achieved by providing the O-ring between the rotor surface and a nut screwed at the end of the stalk or other components.

WO 2011/009901 describes an electric machine with three sealing assemblies arranged in series along a path for cooling fluid between a connecting circuit and a shaft.

US 62361288 B1 describes radial lead spanner nut assembly for preventing leakage of hydrogen gas in power generators. The nut assembly has a plurality of spaced-apart seal channels formed in peripheries of non-threaded portions of the nut body with seal members positioned in the seal channels.

This structure has some drawbacks.

In fact, during operation because of the centrifugal forces and/or thermal deformation, the stalk can deform (by increasing its length). In addition, the deformation could be a permanent deformation, such that over the time the length of the stalk permanently increases. Over time, this could lead to defective sealing at the O-ring, because the increased stalk length can negatively affect the O-ring compression.

### SUMMARY

An aspect of the disclosure includes providing a rotor for an electric machine having at least a hole housing a stalk connected to a conductor, wherein the hole is provided with a seal whose sealing effect is not negatively affected over time due to the thermal and/or centrifugal stress.

These and further aspects are attained by providing a rotor in accordance with the accompanying claims.

### BRIEF DESCRIPTION OF THE DRAWINGS

Further characteristics and advantages will be more apparent from the description of a preferred but non-exclusive embodiment of the rotor, illustrated by way of non-limiting example in the accompanying drawings, in which:
Figure 1 is a schematic view of a rotor, and
Figure 2 is an enlarged cross-section of an end of a stalk protruding from the rotor.

### DETAILED DESCRIPTION OF EXEMPLARY EMBODIMENTS

An electric machine 1 such as an electric generator (other kinds of machines are anyhow possible such as electric motors) has a casing 2 that houses a stator 3 and a rotor 4.

The rotor 4 has an active part 6 and shafts 7 (usually one shaft at each end of the active part 6).

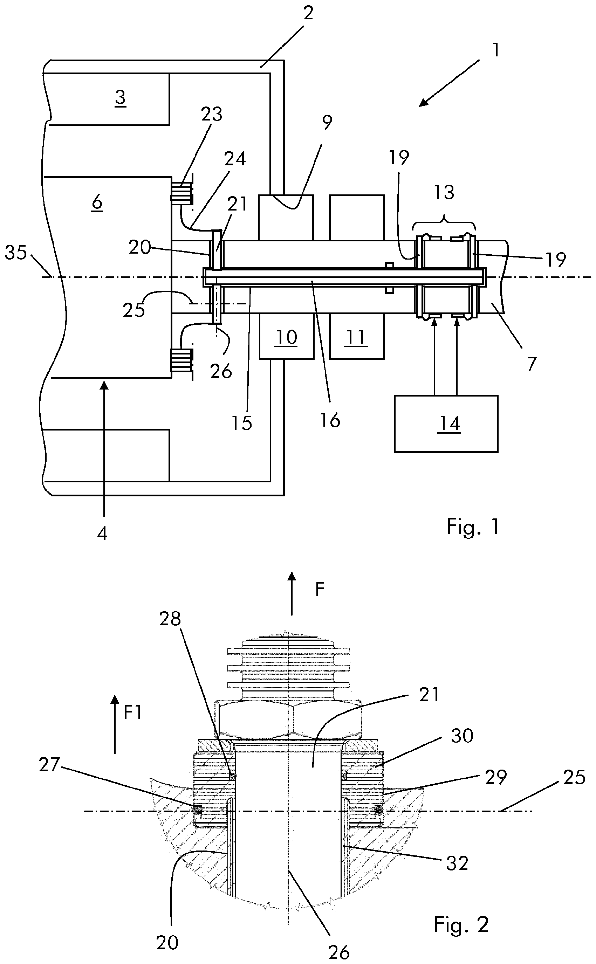

The casing 2 has apertures and the shafts 7 projects outside of the casing 2 through these apertures; for example figure 1 shows the aperture 9 and a seal ring 10 that encircles the shaft 7 at the aperture 9.

In addition, the electric machine 1 also has bearings 11 for supporting the rotor 4 and slip rings 13 connected to an exciter 14.

The rotor 4 (in particular the shaft 7) has a chamber 15 that extends between a rotor part within the casing 2 and a rotor part outside the casing 2; this chamber 15 contains a conductor 16 connected to the slip ring 13. In particular, the conductor 16 is made in two elements insulated from one another and extending over the axial direction of the shaft 7; each of these elements is connected to one ring 19 of the slip ring 13.

The shaft 7 has a hole 20 connected to the chamber 15 and opening to the outside of the rotor 4; the hole 20 houses a conductive stalk 21.

The conductive stalk 21 has a part connected to the conductor 16 and another part protruding from the rotor 4 and connected to a rotor winding 23 via a connection 24.

Between the conductive stalk 21 and the rotor 4 (typically the shaft 7) a seal is provided to prevent gas (such as hydrogen that is contained in the casing 2) from entering the hole.

Advantageously, the seal acts upon directions 25 perpendicular to a hole longitudinal axis 26.

The seal is defined by at least an O-ring 27, 28.

Preferably, the rotor 4 defines a seat 29 at the outlet of each hole and an insulating element 30 is provided between the conductive stalk 21 and the rotor 4; the insulating element 30 is housed in the seat 29. In addition, an insulating tube 32 can also be provided over the whole length of the stalk 21 housed in the hole 15.

The O-ring 27 is provided between the insulating element 30 and surfaces of the seat 29 parallel to the hole longitudinal axis 26.

In addition, the O-ring can also be provided between the insulating element 30 and surfaces of the conductive stalk 21 parallel to the hole longitudinal axis 26.

The chamber 15 is preferably parallel to a longitudinal axis 35 of the rotor 4 and more preferably a longitudinal axis of the chamber 15 overlaps the longitudinal axis 35 of the rotor 4. In addition, the hole longitudinal axis 26 is preferably perpendicular to a longitudinal axis 35 of the rotor 4.

The operation of the electric machine is apparent from that described and illustrated and is substantially the following.

During operation due to the centrifugal and/or thermal stress the stalk 21 may deform; for example the stalk length can increase as indicated by the arrow F.

An increased stalk length as depicted by arrow F can cause a shift of the O-rings 27, 28 as indicated by the arrow F1.

Since this shifting does not affect or substantially affect the compression of the O-rings 27, 28, because this compression is achieved along the direction 25, the sealing at the entrance of the hole 20 is not negatively affected or substantially negatively affected.

Naturally the features described may be independently provided from one another.

In practice the materials used and the dimensions can be chosen at will according to requirements and to the state of the art.

### REFERENCE NUMBERS

- 1: electric machine
- 2: casing
- 3: stator
- 4: rotor
- 6: active part
- 7: shaft
- 9: aperture
- 10: seal ring
- 11: bearing
- 13: slip ring
- 14: exciter
- 15: chamber
- 16: conductor
- 19: ring
- 20: hole
- 21: conductive stalk
- 23: rotor winding
- 24: connection
- 25: direction
- 26: hole longitudinal axis
- 27: O-ring
- 28: O-ring
- 29: seat
- 30: insulating element
- 32: insulating tube
- 35: longitudinal axis
- F: stalk deformation
- F1: O-ring shift

## Claims

1. A rotor (4) for an electric machine (1) having:
an active part (6) and at least a shaft (7) with a chamber (15) containing a conductor (16),
at least a hole (20) connected to the chamber (15) and opening to the outside of the rotor (4),
the at least a hole (20) housing a conductive stalk (21) having a part connected to the conductor (16) and another part protruding from the rotor (4),
two seals being provided between the conductive stalk (21) and the rotor (4) to prevent gas from entering the at least a hole (20), wherein the two seals act upon directions (25) perpendicular to a hole longitudinal axis (26) and are defined each by an O-ring (27, 28), the rotor (4) defines a seat (29) at the outlet of the at least a hole (20), and **characterised in that** an insulating element (30) is provided between the conductive stalk (20) and the rotor (4); the insulating element (30) being housed in the seat (29), an O-ring (27) is provided between the insulating element (30) and surfaces of the seat (29) parallel to the hole longitudinal axis (26), the other O-ring (28) is provided between the insulating element (30) and surfaces of the conductive stalk (21) parallel to the hole longitudinal axis (26).

2. The rotor (4) according to claim 1, **characterised in that** the chamber (15) is parallel to a longitudinal axis (35) of the rotor (4).

3. The rotor (4) according to claim 2, **characterised in that** a longitudinal axis of the chamber (15) overlaps the longitudinal axis (35) of the rotor (4).

4. The rotor (4) according to claim 1, **characterised in that** the hole (20) longitudinal axis (26) is perpendicular to a longitudinal axis (35) of the rotor (4).

5. An electric machine (1) having a casing (2) that houses a stator (3) and a rotor (4) according to claim 1, the rotor (4) having an active part (6) and at least a shaft (7) and the casing (2) having at least an aperture (9), wherein the at least a shaft (7) projects outside of the casing (2) through the at least an aperture (9),
the rotor (4) having a chamber (15) that extends between a rotor part within the casing (2) and a rotor part outside the casing (2), the chamber (15) containing a conductor (16),
the rotor (4) further having a hole (20) connected to the chamber (15) and opening to the outside of the rotor (4), the hole (20) housing a conductive stalk (21),
the conductive stalk (21) having a part connected to the conductor (16) and another part protruding from the rotor (4) and connected to a rotor winding (23), two seals being provided between the conductive stalk (21) and the rotor (4) to prevent gas from entering the hole (20),
**characterised in that** the two seals act upon directions (25) perpendicular to a hole longitudinal axis (26) and are defined each by an O-ring (27, 28), the rotor (4) defines a seat (29) at the outlet of the at least a hole (20), and **in that** an insulating element (30) is provided between the conductive stalk (20) and the rotor (4); the insulating element (30) being housed in the seat (29), an O-ring (27) is provided between the insulating element (30) and surfaces of the seat (29) parallel to the hole longitudinal axis (26), the other O-ring (28) is provided between the insulating element (30) and surfaces of the conductive stalk (21) parallel to the hole longitudinal axis (26).

6. The electric machine (1) according to claim 5, **characterised in that** the electric machine (1) is an electric generator.

7. The electric machine (1) according to claim 5, **characterised in that** the electric machine (1) is a hydrogen cooled electric machine.

## Patentansprüche

1. Rotor (4) für eine elektrische Maschine (1), die Folgendes aufweist:
einen aktiven Teil (6) und mindestens eine Welle (7) mit einer Kammer (15), die einen Stromleiter (16) enthält,
mindestens eine Bohrung (20), die mit der Kammer (15) verbunden ist und sich zu der Außenseite des Rotors (4) öffnet,
wobei die mindestens eine Bohrung (20) einen leitfähigen Steg (21) beherbergt, der einen mit dem Stromleiter (16) verbundenen Teil und einen anderen von dem Rotor (4) abstehenden Teil aufweist,
zwei Dichtungen, die zwischen dem leitfähigen Steg (21) und dem Rotor (4) bereitgestellt werden, um zu verhindern, dass Gas in die mindestens eine Bohrung (20) eintritt,
wobei die zwei Dichtungen in Richtungen (25) wirken, die senkrecht zu einer Längsachse (26) der Bohrung stehen, und jeweils durch einen Dichtungsring (27, 28) definiert werden, wobei der Rotor (4) einen Sitz (29) an dem Ausgang der mindestens einen Bohrung (20) definiert, und
**dadurch gekennzeichnet, dass** ein isolierendes Element (30) zwischen dem leitfähigen Steg (20) und dem Rotor (4) bereitgestellt wird; wobei das isolierende Element (30) in dem Sitz (29) beherbergt ist, wobei ein Dichtungsring (27) zwischen dem isolierenden Element (30) und Oberflächen des Sitzes (29) parallel zur Längsachse (26) der Bohrung bereitgestellt wird, wobei der andere Dichtungsring (28) zwischen dem isolierenden Element (30) und Oberflächen des leitfähigen Stegs (21) parallel zur Längsachse (26) der Bohrung bereitgestellt wird.

2. Rotor (4) nach Anspruch 1, **dadurch gekennzeichnet, dass** die Kammer (15) parallel zu einer Längsachse (35) des Rotors (4) liegt.

3. Rotor (4) nach Anspruch 2, **dadurch gekennzeichnet, dass** eine Längsachse der Kammer (15) die Längsachse (35) des Rotors (4) überlappt.

4. Rotor (4) nach Anspruch 1, **dadurch gekennzeichnet, dass** die Längsachse (26) der Bohrung (20) senkrecht zu einer Längsachse (35) des Rotors (4) steht.

5. Elektrische Maschine (1), die ein Gehäuse (2) aufweist, das einen Stator (3) und einen Rotor (4) nach Anspruch 1 aufweist,
wobei der Rotor (4) einen aktiven Teil (6) und mindestens eine Welle (7) aufweist und wobei das Gehäuse (2) mindestens eine Öffnung (9) aufweist, wobei die mindestens eine Welle (7) durch die mindestens eine Öffnung (9) aus dem Gehäuse (2) hinausragt,
wobei der Rotor (4) eine Kammer (15) aufweist, die sich zwischen einem Rotorteil innerhalb des Gehäuses (2) und einem Rotorteil außerhalb des Gehäuses (2) erstreckt, wobei die Kammer (15) einen Stromleiter (16) enthält,
wobei der Rotor (4) außerdem eine Bohrung (20) aufweist, die mit der Kammer (15) verbunden ist und sich zu der Außenseite des Rotors (4) öffnet, wobei die Bohrung (20) einen leitfähigen Steg (21) beherbergt,
wobei der leitfähige Steg (21) einen Teil, der mit dem Stromleiter (16) verbunden ist, und einen anderen von dem Rotor (4) abstehenden Teil aufweist, der mit einer Rotorwicklung (23) verbunden ist, wobei zwei Dichtungen zwischen dem leitfähigen Steg (21) und dem Rotor (4) bereitgestellt werden, um zu verhindern, dass Gas in die Bohrung (20) eintritt, **dadurch gekennzeichnet, dass** die zwei Dichtungen in Richtungen (25) wirken, die senkrecht zu einer Längsachse (26) der Bohrung stehen, und jeweils durch einen Dichtungsring (27, 28) definiert werden, dass der Rotor (4) einen Sitz (29) an dem Ausgang der mindestens einen Bohrung (20) definiert, und dadurch dass ein isolierendes Element (30) zwischen dem leitfähigen Steg (20) und dem Rotor (4) bereitgestellt wird; wobei das isolierende Element (30) in dem Sitz (29) beherbergt ist, wobei ein Dichtungsring (27) zwischen dem isolierenden Element (30) und Oberflächen des Sitzes (29) parallel zur Längsachse (26) der Bohrung bereitgestellt wird, wobei der andere Dichtungsring (28) zwischen dem isolierenden Element (30) und Oberflächen des leitfähigen Stegs (21) parallel zur Längsachse (26) der Bohrung bereitgestellt wird.

6. Elektrische Maschine (1) nach Anspruch 5, **dadurch gekennzeichnet, dass** die elektrische Maschine (1) ein elektrischer Generator ist.

7. Elektrische Maschine (1) nach Anspruch 5, **dadurch gekennzeichnet, dass** die elektrische Maschine (1) eine wasserstoffgekühlte elektrische Maschine ist.

## Revendications

1. Rotor (4) pour une machine électrique (1) ayant :
une partie active (6) et au moins un arbre (7) avec une chambre (15) contenant un conducteur (16),
au moins un trou (20) relié à la chambre (15) et s'ouvrant sur l'extérieur du rotor (4),
l'au moins un trou (20) accueillant une tige conductrice (21) ayant une partie reliée au conducteur (16) et une autre partie faisant saillie depuis le rotor (4),
deux joints d'étanchéité étant disposés entre la tige conductrice (21) et le rotor (4) pour empêcher du gaz d'entrer dans l'au moins un trou (20),
dans lequel les deux joints d'étanchéité agissent sur des directions (25) perpendiculaires à un axe longitudinal (26) du trou et sont chacun définis par un joint torique (27, 28), le rotor (4) définit un siège (29) à la sortie de l'au moins un trou (20), et
**caractérisé en ce qu'**un élément isolant (30) est disposé entre la tige conductrice (20) et le rotor (4) ; l'élément isolant (30) étant accueilli dans le siège (29), un joint torique (27) est disposé entre l'élément isolant (30) et des surfaces du siège (29) parallèles à l'axe longitudinal (26) du trou, l'autre joint torique (28) est disposé entre l'élément isolant (30) et des surfaces de la tige conductrice (21) parallèles à l'axe longitudinal (26) du trou.

2. Rotor (4) selon la revendication 1, **caractérisé en ce que** la chambre (15) est parallèle à un axe longitudinal (35) du rotor (4).

3. Rotor (4) selon la revendication 2, **caractérisé en ce qu'**un axe longitudinal de la chambre (15) se superpose à l'axe longitudinal (35) du rotor (4).

4. Rotor (4) selon la revendication 1, **caractérisé en ce que** l'axe longitudinal (26) du trou (20) est perpendiculaire à un axe longitudinal (35) du rotor (4).

5. Machine électrique (1) ayant une enveloppe (2) qui accueille un stator (3) et un rotor (4) selon la revendication 1,
le rotor (4) ayant une partie active (6) et au moins un arbre (7) et l'enveloppe (2) ayant au moins une ouverture (9), l'au moins un arbre (7) se projetant à l'extérieur de l'enveloppe (2) par l'au moins une ouverture (9),
le rotor (4) ayant une chambre (15) qui s'étend entre une partie du rotor à l'intérieur de l'enveloppe (2) et une partie du rotor à l'extérieur de l'enveloppe (2), la chambre (15) contenant un conducteur (16),
le rotor (4) ayant en outre un trou (20) relié à la chambre (15) et s'ouvrant sur l'extérieur du rotor (4), le trou (20) accueillant une tige conductrice (21),
la tige conductrice (21) ayant une partie reliée au conducteur (16) et une autre partie faisant saillie depuis le rotor (4) et reliée à un bobinage de rotor (23),
deux joints d'étanchéité étant disposés entre la tige conductrice (20) et le rotor (4) pour empêcher du gaz d'entrer dans le trou (20),
**caractérisée en ce que** les deux joints d'étanchéité agissent sur des directions (25) perpendiculaires à un axe longitudinal (26) du trou et sont chacun définis par un joint torique (27, 28), le rotor (4) définit un siège (29) à la sortie de l'au moins un trou (20), et **en ce qu'**un élément isolant (30) est disposé entre la tige conductrice (20) et le rotor (4) ; l'élément isolant (30) étant accueilli dans le siège (29), un joint torique (27) est disposé entre l'élément isolant (30) et des surfaces du siège (29) parallèles à l'axe longitudinal (26) du trou, l'autre joint torique (28) est disposé entre l'élément isolant (30) et des surfaces de la tige conductrice (21) parallèles à l'axe longitudinal (26) du trou.

6. Machine électrique (1) selon la revendication 5,
**caractérisée en ce que** la machine électrique (1) est un générateur électrique.

7. Machine électrique (1) selon la revendication 5,
**caractérisée en ce que** la machine électrique (1) est une machine électrique refroidie à l'hydrogène.
